# EUROPEAN PATENT SPECIFICATION

(11) **EP 4 100 645 B1**
(45) Date of publication and mention of the grant of the patent: **03.04.2024**
(21) Application number: 21711784.5
(22) Date of filing: 03.03.2021
(51) Int. Cl.: F03D 1/06, F03D 13/10, F03D 80/50

(54) **AERODYNAMIC LOAD REDUCTION DURING BLADE INSTALLATION AND SERVICE IN A WIND TURBINE**
VERRINGERUNG DER AERODYNAMISCHEN BELASTUNG BEI DER SCHAUFELMONTAGE UND -WARTUNG EINER WINDTURBINE
RÉDUCTION DE CHARGE AÉRODYNAMIQUE PENDANT L'INSTALLATION ET LE FONCTIONNEMENT DE PALES DANS UNE ÉOLIENNE

(30) Priority: 25.03.2020 EP 20165448
(43) Date of publication of application: 14.12.2022
(73) Proprietor: Siemens Gamesa Renewable Energy A/S, 7330 Brande (DK)
(72) Inventor: GAMBERINI, Andrea, 2000 Frederiksberg (DK)
(74) Representative: SGRE-Association
(86) International application number: PCT/EP2021/055356
(87) International publication number: WO 2021/190891

(56) References cited:
- EP-A1- 2 708 734
- EP-A1- 3 225 834
- EP-A2- 2 565 440
- EP-B1- 2 708 734
- EP-B1- 3 225 834

## Description

### Field of invention

The present invention relates to a method for reducing the aerodynamic load during blade installation and service in a wind turbine.

### Art Background

During blade installation and service cases there is no control on the aerodynamic loads of the blades, because pitch control and rotor speed control are not active. These loads can drive the design of the wind turbine components like hub and blade bolts and of the installation and service tools, e.g. cranes. Blade loads during installation may drive requirement on the number of blade bolts needed before removing the crane. Blade loads during service may drive requirement on rotor components, such as rotor lock and pitch lock.

Methods are known, which may be sued for reducing such loads. For example, the blade may be installed with an alignment to the wind trying to minimize the aerodynamic load, or the rotor may be oriented such that aerodynamic blade loads are reduced. Further, temporary add-on like stall strips may be installed on the blade during installation. EP 2 708 734 A1, for example, discloses a wind turbine blade comprising one or more flow disturbing devices for provoking air flow separation arranged on the suction side of the blade, wherein the flow disturbing device is removable. EP 3 225 834 A1 describe a method which comprises the steps of attaching a temporary cover on the rotor blade for covering at least a part of the aerodynamic device before lifting the rotor blade to the top of the tower of the wind turbine, and detaching the cover subsequently.

Such methods are not yet considered optimal. It is therefore an object of the present invention to efficiently reduction loads during blade installation and service in a wind turbine. In particular, it would be desirable to achieve such scope without using additional temporary elements on the blades, in order to reduce time of intervention and costs.

### Summary of the Invention

This object may be achieved by the subject matter according to the independent claim. Advantageous embodiments of the present invention are described by the dependent claims.

According to the present invention, it is provided a method for installing or servicing a wind turbine including at least a rotor blade having a plurality of aerodynamic devices for influencing the airflow flowing from the leading edge of the rotor blade of the wind turbine to the trailing edge of the rotor blade. The method comprising the steps of:
- activating the aerodynamic devices,
- installing the rotor blade or performing a service on the wind turbine,
- deactivating the aerodynamic devices.

The phase of activating the aerodynamic devices is performed before or during the phase of installing the rotor blade or performing a service on the wind turbine. The phase of deactivating the aerodynamic devices is performed during or after the phase of installing the rotor blade or performing a service on the wind turbine.

The method of the present invention allows activation of the aerodynamic devices to change the blade shape during installing or servicing a wind turbine. The change in the blade shape reduces the aerodynamic forces developed by the wind flowing on the blade. Lower aerodynamic forces lead to lower blade oscillation and lower blade loads, that the installation tools (e.g. cranes) or the wind turbine have to compensate or carry. Such aerodynamic devices are integrated in the rotor blades, not a temporary add-on like stall strips. Therefore, it is not needed to add it before the installation/service and remove it after installation/service. The above method makes, with respect to the prior art installation and service:
- more flexible because blades are made more less sensitive to the wind direction and speed and more stable;
- faster due to more flexibility, also depending on the fact that removable add-ons are not needed;
- cheaper because it requires less time and the tools can be smaller, due to lower loads.

Lower blade loads during installation reduces requirement on the number of blade bolts needed before removing the crane. Lower blade loads during service reduce requirement on rotor components, such as rotor lock and pitch lock.

The aerodynamic devices are flaps, i.e. aerodynamic devices installed at the trailing edge of the rotor blade. Alternatively, the aerodynamic devices are spoilers, i.e. an aerodynamic device installed at the leading edge or in a position intermediate between the leading edge and the trailing edge of the rotor blade. Flaps and spoilers may be together provided on the rotor blade.

The aerodynamic devices may be activated before the phase of installing the rotor blade or performing a service, for example before the lifting phase of the rotor blade. Alternatively, the aerodynamic devices may be activated during the installation of the rotor blade or performing a service, for example during the lifting phase of the rotor blade.

According to embodiments of the present invention, each aerodynamic device is movable by an actuator between a first protruded configuration and a second retracted configuration, the aerodynamic devices being in the first protruded configuration when activated and in the second retracted configuration when deactivated.

The aerodynamic devices may be deactivated after the phase of installing the rotor blade or performing a service on the wind turbine is terminated, for example after the rotor blade has been connected to the hub of the wind turbine. Alternatively, the aerodynamic devices may be deactivated during the installation of the rotor blade, for example during the lifting phase of the rotor blade.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a wind turbine;
- Figure 2: shows a rotor blade of a wind turbine with an aerodynamic device, which is operatable for performing the present invention;
- Figure 3: shows a first radial section of the rotor blade of figure 2;
- Figure 4: shows a second radial section of the rotor blade of figure 2.
- Figure 5: shows a block diagram of a method according to the present invention.
- Figure 6: shows a block diagram of another embodiment of a method according to the present invention.

### Detailed Description

The drawings are in schematic form. Similar or identical elements are referenced by the same or different reference signs.

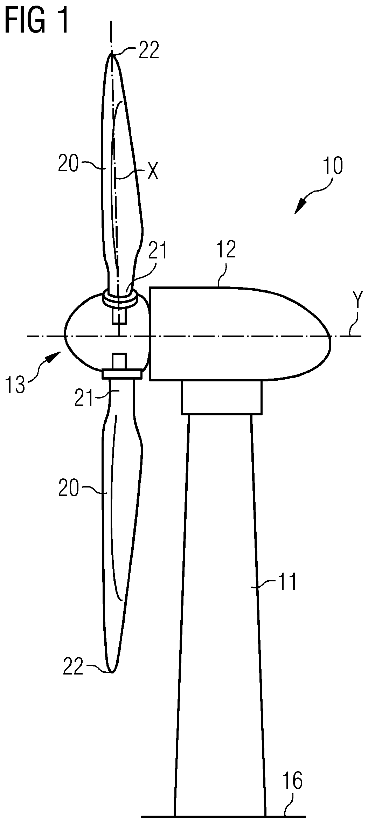

**Figure 1** shows a conventional wind turbine 10 for generating electricity. The wind turbine 10 comprises a tower 11 which is mounted on the ground 16 at one end. At the opposite end of the tower 11 there is mounted a nacelle 12. The nacelle 12 is usually mounted rotatable with regard to the tower 11, which is referred to as comprising a yaw axis substantially perpendicular to the ground 16. The nacelle 12 usually accommodates the generator of the wind turbine and the gear box (if the wind turbine is a geared wind turbine). Furthermore, the wind turbine 10 comprises a hub 13 which is rotatable about a rotor axis Y. When not differently specified, the terms axial, radial and circumferential in the following are made with reference to the rotor axis Y.

The hub 13 is often described as being a part of a wind turbine rotor, wherein the wind turbine rotor is capable to rotate about the rotor axis Y and to transfer the rotational energy to an electrical generator (not shown).

The wind turbine 1 further comprises at least one blade 20 (in the embodiment of Figure 1, the wind rotor comprises three blades 20, of which only two blades 20 are visible) mounted on the hub 13. The blades 4 extend substantially radially with respect to the rotational axis Y.

Each rotor blade 20 is usually mounted pivotable to the hub 13, in order to be pitched about respective pitch axes X. This improves the control of the wind turbine and in particular of the rotor blades by the possibility of modifying the direction at which the wind is hitting the rotor blades 20. Each rotor blade 20 is mounted to the hub 13 at its root section 21. The root section 21 is opposed to the tip section 22 of the rotor blade.

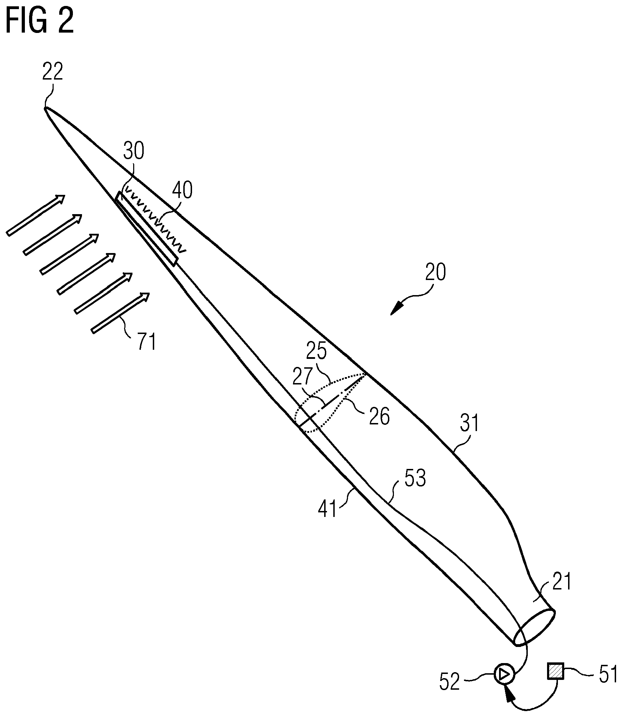

**Figure 2** illustrates the rotor blade 20 comprising an aerodynamic device 30 in the form of an actuated spoiler. Between the root section 21 and the tip section 22 the rotor blade 20 furthermore comprises a plurality of aerofoil sections for generating lift. Each aerofoil section comprises a suction side 25 and a pressure side 26. The aerofoil shape of the aerofoil portion is symbolized by one aerofoil profile which is shown in Figure 2 and which illustrates the cross-sectional shape of the rotor blade at this spanwise position. Also note that the suction side 25 is divided or separated from the pressure side 26 by a chord line 27 which connects a leading edge 41 with a trailing edge 31 of the rotor blade 20. The aerodynamic device 30 in Figure 2 is movable by means of a pressure line 53 connected to a pneumatic actuator 34. According to the embodiment of the attached figures, the pneumatic actuator 34 is realized as a hose. The hose 34 comprises an elastic outer skin, such that it can inflate and deflate reversibly and during many cycles when operated by means of the pressure line 53. The pressure line 53 is comprised in a pressure supply system 52 and controlled by a control unit 51. The pressure supply system 52 provides pressurized air or other pressurized gas, to the pneumatic actuator 34. In this context, the term "pressurized fluid" not only implies positive pressure but also negative pressure, wherein fluid is sucked (or "drawn") out of the pneumatic actuator 34. The pressure line 53 could be in practice realized as tubes or pipes which do not significantly change their volume. The control unit 51 is responsible for setting a specific pressure at the pressure supply system 52 which subsequently leads to a certain predetermined pressure at the pneumatic actuator 34. By controlling the pressure of the pressurized air, the pneumatic actuator 34 is operated between an inflated and a deflated configuration. Any of the control unit 51 and the pressure supply system 52 may be located in the root section 21 of the rotor blade 20 or placed elsewhere in the wind turbine, such as e.g. in the hub 13 of the wind turbine 10 or in the nacelle 12 or in the tower 11. The rotor blade 20 additionally comprises a flow regulating unit 40 comprising multiple pairs of vortex generators. The flow regulating unit 40 are arranged on the suction side 25 of the blade 20 between the aerodynamic device 30 and the the trailing edge 31. The flow regulating unit 40 may be arranged on the suction side 25 of the blade 20 between the leading edge 41 and the aerodynamic device 30. The flow regulating unit 40 may be not present and only the aerodynamic device 30 may be used to regulate the flow on the surface of the blade 20. The blade 20 may comprise a plurality of aerodynamic devices 30. The aerodynamic device 30 may be configured as a trailing edge flap. The blade 20 may comprise a plurality of aerodynamic devices 30 including flaps and spoilers.

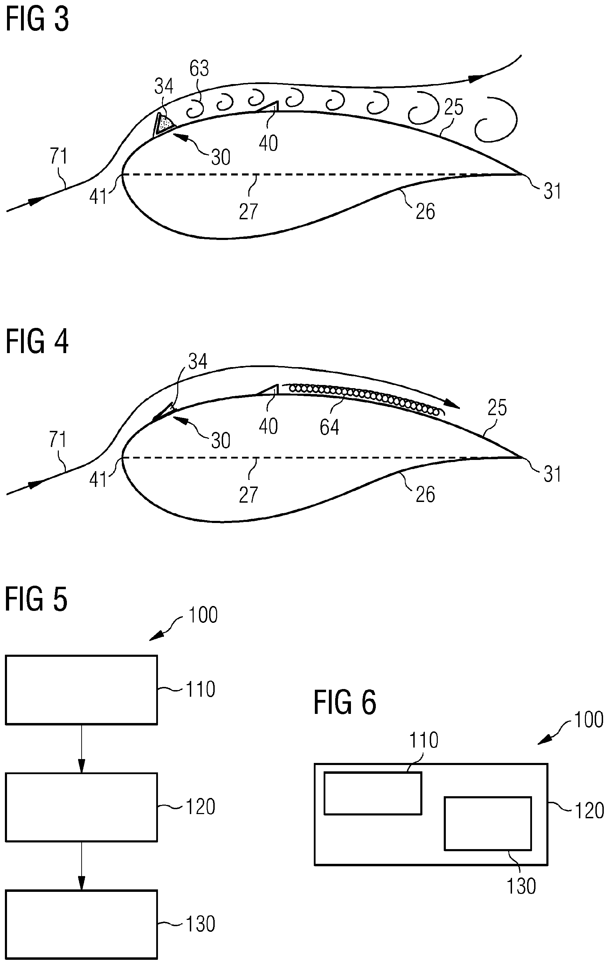

Figure **3** shows the aerodynamic device 30 in a first protruded configuration, corresponding to an inflated configuration of the pneumatic actuator 34. In the first configuration the aerodynamic device 30 deviates the airflow 71 which is flowing from the leading edge 41 to the trailing edge 31 of the rotor blade. The aerodynamic device 30 in the first protruded configuration induces stall. This is visualized with relatively large vortices 63 downstream of the aerodynamic device 30. A consequence of the induced stall is a decrease in lift of the rotor blade and, consequently, a reduced loading of the rotor blade and related components of the wind turbine.

Figure **4** shows the aerodynamic device 30 in a second retracted configuration, i.e. moved downwards towards the surface of the rotor blade 20, corresponding to a deflated configuration of the pneumatic actuator 34. In this second configuration, the airflow 71 flowing across the aerodynamic device 30 remains attached to the surface of the rotor blade 20, thus that no flow separation, i.e. stall, occurs. As a consequence, the lift of the rotor blade increases. Re-energizing vortices 64 are generated in the boundary layer by the vortex generators 40, which have the effect of helping to increase the lift. As a result, the highest lift values can be achieved.

By operating the pneumatic actuator 34 of the aerodynamic device 30 through the pressure line 53, the aerodynamic device 30 can be moved between the first protruded configuration and the second retracted configuration in order to vary the aerodynamic properties of the blade as desired and requested when installing or servicing the wind turbine 10.

As shown in Figure **5****,** when installing the wind turbine 10, the method 100 comprises a first step 110 of activating the aerodynamic device 30 at the beginning or during the lift and installation of the rotor blade 20. In the first step 110 the aerodynamic device 30 is activated to reach the first protruded configuration. The activation of the aerodynamic device 30 changes the blade shape. The change in the blade shape reduces the aerodynamic forces developed by the wind flowing on the rotor blade 20. In a second step 120 of the method the rotor blade 20 is installed on the hub 13. In a third step 130 of the method, after the installation has completed, the aerodynamic device 30 is deactivated, i.e. the aerodynamic device 30 is brought to the second retracted configuration.

Alternatively, when servicing the wind turbine 10, the method 100 comprises a first step 110 of activating the aerodynamic device 30 at the beginning or during the service procedure. In the first step 110 the aerodynamic device 30 is activated to reach the first protruded configuration. The activation of the aerodynamic device 30 changes the blade shape. The change in the blade shape reduces the aerodynamic forces developed by the wind flowing on the rotor blade 20. In a second step 120 of the method the service is performed. In a third step 130 of the method, after the service has been completed, the aerodynamic device 30 is deactivated, i.e. the aerodynamic device 30 is brought to the second retracted configuration.

In another embodiment, as shown in Figure **6****,** the first phase of activating 110 the aerodynamic devices 30 and/or the third phase of deactivating 130 the aerodynamic devices 30 are performed during the phase of installing 120 the rotor blade 20 or performing a service on the wind turbine. For example, the aerodynamic devices 30 may be activated and/or deactivated during a phase of lifting a rotor blade 20 towards the hub 13, depending on the conditions (intensity and direction) of the wind.

## Claims

1. Method (100) for installing or servicing a wind turbine (10) including at least a rotor blade (20) having a plurality of aerodynamic devices (30) for influencing the airflow (61) flowing from the leading edge (41) of the rotor blade (20) of the wind turbine (10) to the trailing edge (31) of the rotor blade (20), the method comprising the steps of:
- activating (110) the aerodynamic devices (30),
- installing (120) the rotor blade (20) or performing a service on the wind turbine,
- deactivating (130) the aerodynamic devices (30),
wherein the phase of activating (110) the aerodynamic devices (30) is performed before or during the phase of installing (120) the rotor blade (20) or performing a service on the wind turbine and the phase of deactivating (130) the aerodynamic devices (30) is performed during or after the phase of installing (120) the rotor blade (20) or performing a service on the wind turbine.

2. Method (100) according to the claim 1, wherein the aerodynamic devices (30) are activated when installing the wind turbine (10) at the beginning of a lifting phase of at least a rotor blade (20) or during the lifting phase of at least a rotor blade (20).

3. Method (100) according to the claim 1 or 2, wherein the aerodynamic devices (30) are deactivated when installing the wind turbine (10) at the end of a lifting phase of at least a rotor blade (20) or during the lifting phase of at least a rotor blade (20).

4. Method (100) according to any of the previous claims, wherein each aerodynamic device (30) is movable by an actuator between a first protruded configuration and a second retracted configuration, the aerodynamic devices (30) being in the first protruded configuration when activated and in the second retracted configuration when deactivated.

## Patentansprüche

1. Verfahren (100) zum Installieren oder Warten einer Windenergieanlage (10), die mindestens ein Rotorblatt (20) mit einer Mehrzahl von aerodynamischen Vorrichtungen (30) zum Beeinflussen der Luftströmung (61) umfasst, die von der Vorderkante (41) des Rotorblatts (20) der Windenergieanlage (10) zur Hinterkante (31) des Rotorblatts (20) strömt, wobei das Verfahren die folgenden Schritte umfasst:
- Aktivieren (110) der aerodynamischen Vorrichtungen (30),
- Installieren (120) des Rotorblatts (20) oder Durchführen einer Wartung an der Windenergieanlage,
- Deaktivieren (130) der aerodynamischen Vorrichtungen (30),
wobei die Phase des Aktivierens (110) der aerodynamischen Vorrichtungen (30) vor oder während der Phase des Installierens (120) des Rotorblatts (20) oder Durchführens einer Wartung an der Windenergieanlage durchgeführt wird und die Phase des Deaktivierens (130) der aerodynamischen Vorrichtungen (30) während oder nach der Phase des Installierens (120) des Rotorblatts (20) oder Durchführens einer Wartung an der Windenergieanlage durchgeführt wird.

2. Verfahren (100) nach Anspruch 1, wobei die aerodynamischen Vorrichtungen (30) bei Installieren der Windenergieanlage (10) zu Beginn einer Hebephase mindestens eines Rotorblatts (20) oder während der Hebephase mindestens eines Rotorblatts (20) aktiviert werden.

3. Verfahren (100) nach Anspruch 1 oder 2, wobei die aerodynamischen Vorrichtungen (30) bei Installieren der Windenergieanlage (10) am Ende einer Hebephase mindestens eines Rotorblatts (20) oder während der Hebephase mindestens eines Rotorblatts (20) deaktiviert werden.

4. Verfahren (100) nach einem der vorhergehenden Ansprüche, wobei jede aerodynamische Vorrichtung (30) durch einen Aktuator zwischen einer ersten hervorstehenden Auslegung und einer zweiten eingezogenen Auslegung beweglich ist, wobei sich die aerodynamischen Vorrichtungen (30) in der ersten hervorstehenden Auslegung befinden, wenn sie aktiviert sind, und in der zweiten eingezogenen Auslegung, wenn sie deaktiviert sind.

## Revendications

1. Procédé (100) destiné à l'installation ou à l'entretien d'une éolienne (10) qui comprend au moins une pale de rotor (20) possédant un certain nombre de dispositifs aérodynamiques (30) destinés à influencer le flux d'air (61) s'écoulant depuis le bord d'attaque (41) de la pale de rotor (20) de l'éolienne (10) en direction du bord de fuite (31) de la pale de rotor (20), le procédé comprenant les étapes de :
- activation (110) des dispositifs aérodynamiques (30),
- installation (120) de la pale de rotor (20) ou entretien de l'éolienne,
- désactivation (130) des dispositifs aérodynamiques (30),
dans lequel la phase d'activation (110) des dispositifs aérodynamiques (30) est mise en oeuvre avant ou au cours de la phase d'installation (120) de la pale de rotor (20) ou d'entretien de l'éolienne et la phase de désactivation (130) des dispositifs aérodynamiques (30) est mise en oeuvre pendant ou après la phase d'installation (120) de la pale de rotor (20) ou d'entretien de l'éolienne.

2. Procédé (100) selon la revendication 1, dans lequel les dispositifs aérodynamiques (30) sont activés lors de l'installation de l'éolienne (10) au début d'une phase de levage d'au moins une pale de rotor (20) ou au cours de la phase de levage d'au moins une pale de rotor (20).

3. Procédé (100) selon la revendication 1 ou 2, dans lequel les dispositifs aérodynamiques (30) sont désactivés lors de l'installation de l'éolienne (10) à la fin d'une phase de levage d'au moins une pale de rotor (20) ou au cours de la phase de levage d'au moins une pale de rotor (20).

4. Procédé (100) selon l'une quelconque des revendications précédentes, dans lequel chaque dispositif aérodynamique (30) peut être déplacé par l'intermédiaire d'un actionneur entre une première configuration saillante et une seconde configuration rétractée, les dispositifs aérodynamiques (30) se trouvant dans la première configuration saillante lorsqu'ils sont activés et dans la seconde configuration rétractée lorsqu'ils sont désactivés.
